# EUROPÄISCHE PATENTANMELDUNG

(11) **EP 1 117 209 A2**
(43) Veröffentlichungstag der Anmeldung: **18.07.2001**
(21) Anmeldenummer: 01440005.5
(22) Anmeldetag: 12.01.2001
(51) Int. Cl.: H04L 12/14, H04L 12/28

(54) **Verfahren, Internet-Zugangseinrichtung, Vermittlungsstelle und Gebührenerfassungseinrichtung zur individuellen Vergebührung von Internet-Diensten**

(30) Priorität: 13.01.2000 DE 10001079
(71) Anmelder: ALCATEL, 75008 Paris (FR)
(72) Erfinder: Shen, Yuzhong, 70499 Stuttgart (DE); Breckel, Heiko, 73230 Kirchheim (DE); Seckelmann, Uwe, 70825 Korntal-Münchingen (DE)
(74) Vertreter: Brose, Gerhard

(57) **Zusammenfassung**

Die Erfindung betrifft ein Verfahren, eine Internet-Zugangseinrichtung (POP), eine Gebührenerfassungseinrichtung (ACC) und eine Vermittlungsstelle (SSP) zur individuellen Vergebührung von Internet-Diensten durch die Internet-Zugangseinrichtung, über die ein Teilnehmer (SUBA) mit einem an ein Telefon-Telekommunikationsnetz (PSTN) angeschlossenen Endgerät (TERA), mit Hilfe des Telekommunikationsnetzes Zugang zum Internet (INT) erhält. Dabei baut das Endgerät eine Verbindung über das Telekommunikationsnetz zu der Zugangseinrichtung auf und das Telekommunikationsnetz übermittelt eine dem Endgerät zugeordnete Teilnehmernummer an die Zugangseinrichtung. Das Endgerät sendet der Zugangseinrichtung eine Dienstanforderungsnachricht, die die Zugangseinrichtung an eine Internet-Diensteinrichtung (CO1, CO2) zur Erbringung des Dienstes weitersendet. Die Zugangseinrichtung ermittelt eine Gebührenforderung mit einer Angabe von Gebühren für die Erbringung des Dienstes und sendet an eine Gebührenerfassungseinrichtung (ACC) des Telekommunikationsnetzes eine Gebührennachricht, welche die Teilnehmernummer des Teilnehmers sowie eine Angabe der in der Gebührenforderung die für die Nutzung des angeforderten Dienstes angeforderten Gebühren enthält. Die Gebührenerfassungseinrichtung bucht die in angegebenen Gebühren auf ein Konto des Teilnehmers.

## Beschreibung

Die vorliegende Erfindung betrifft ein Verfahren gemäß dem Oberbegriff des Anspruchs 1, sowie eine Internet-Zugangseinrichtung gemäß dem Oberbegriff des Anspruchs 9 hierfür, eine Gebührenerfassungseinrichtung gemäß dem Oberbegriff des Anspruchs 10 hierfür sowie eine Vermittlungsstelle mit einer Internet-Zugangseinrichtung gemäß dem Oberbegriff des Anspruchs 11 hierfür.

Wenn ein typischer End-Teilnehmer mit seinem Endgerät, üblicherweise mit einem Personal Computer, eine Online-Verbindung zu einem Datennetzwerk, insbesondere zum Internet aufbaut, benutzt er dazu zumeist die Dienste eines öffentlichen Telefonnetzwerkes, auch als PSTN (Public Switched Telephone Network) bezeichnet. Der Teilnehmer schließt dann sein Endgerät über ein Modem an die zu seiner Wohnung führende Teilnehmeranschlussleitung an und wählt an dem Endgerät die Nummer einer Zugangseinrichtung zum Internet. Das öffentliche Telefonnetzwerk stellt dann die Verbindung zwischen dem Endgerät und der Zugangseinrichtung her, so dass der Teilnehmer mit seinem Endgerät "online" ist. Über einen sogenannten Internet Service Provider kann der Teilnehmer dann Dienste des Internets nutzen. Üblicherweise fallen für den Teilnehmer dabei einerseits Telefon-Gebühren für die Nutzung des Telefonnetzwerks an, die durch den Betreiber des Telefonnetzwerks einem Gebührenkonto des Teilnehmers belastet werden, und andrerseits Internet-Gebühren für den Zugang zum Internet, die durch den ISP separat berechnet werden. Will der Teilnehmer jedoch von einem sogenannten Content Provider gebührenpflichtige Dienste nutzen, muss er diese beispielsweise per Kreditkartenzahlung oder per sogenanntem Micropayment separat begleichen. Diese inhomogene Zahlungsform an verschiedene Empfänger ist für den Teilnehmer in höchstem Masse unbequem.

Es ist daher Aufgabe der Erfindung, einem Teilnehmer, der mit seinem Endgerät über ein Telefon-Telekommunikationsnetz Zugang zum Internet erhält, eine bequeme und Zahlung von Gebühren zu ermöglichen, die für die Nutzung von durch das Internet angebotenen Diensten anfallen.

Diese Aufgabe wird durch ein Verfahren gemäß der technischen Lehre des Anspruchs 1, eine Internet-Zugangseinrichtung gemäß der technischen Lehre des Anspruchs 9, eine Gebührenerfassungseinrichtung gemäß der technischen Lehre des Anspruchs 10 sowie eine Vermittlungsstelle gemäß der technischen Lehre des Anspruchs 11 gelöst. Weitere vorteilhafte Ausgestaltungen der Erfindung sind den abhängigen Ansprüchen und der Beschreibung zu entnehmen. Kombinationen der Merkmale aus den Ansprüchen untereinander sind ohne Weiteres möglich.

Der Erfindung liegt dabei der Gedanke zugrunde, dass von einem Teilnehmer mit einem Endgerät, beispielsweise einem Personal Computer, zunächst in bekannter Weise über eine Teilnehmeranschlussleitung eines öffentlichen Telekommunikationsnetzes eine Online-Verbindung zu einer Zugangseinrichtung des Internets aufgebaut wird. Das Telefon-Telekommunikationsnetz übermittelt dann eine dem Endgerät zugeordnete Teilnehmernummer oder eine sonstige, die Teilnehmeranschlussleitung kennzeichnende Kennziffer an die Internet-Zugangseinrichtung, so dass diese den Teilnehmer identifizieren kann. Nach Eingabe einer Anforderung von Internetdiensten durch den Teilnehmer, sendet das Endgerät eine Dienstanforderungsnachricht an die Internet-Zugangseinrichtung, die die Internet-Zugangseinrichtung an eine Internet-Diensteinrichtung, z.B. einen Server eines sogenannten Internet Service Providers (ISP) oder eines sogenannten Content Providers zur Erbringung des Dienstes weitersendet. Die Internet-Zugangseinrichtung ermittelt eine Gebührenforderung mit einer Angabe von Gebühren für die Erbringung des Dienstes, indem sie beispielsweise die Dienstanforderungsnachricht analysiert oder von der Internet-Diensteinrichtung eine Gebührenforderungsnachricht erhält. Die Internet-Zugangseinrichtung erfasst dann die Gebührenforderung und sendet an eine Gebührenerfassungseinrichtung des Telefon-Telekommunikationsnetzes eine Gebührennachricht, welche die Teilnehmernurnmer oder sonstige Kennziffer des Teilnehmers sowie eine Angabe zumindest der in der Gebührenforderung die für die Nutzung des angeforderten Dienstes angeforderten Gebühren enthält. Die Gebührenerfassungseinrichtung bucht die in der Gebührennachricht angegebenen Gebühren dann auf ein Konto des Teilnehmers. Diese Internet-Gebühren können dann zusammen mit Telefon-Gebühren, die für die Nutzung des Telefon-Telekommunikationsnetzes anfallen, dem Teilnehmer in Rechnung gestellt werden, so dass der Teilnehmer sehr bequem bezahlen kann und nicht separate, von verschiedener Seite gestellte Rechnungen begleichen muss.

Die erfindungsgemäße Lösung ist auch solchen Lösungen überlegen, bei denen durch einen Betreiber des Telefon-Telekommunikationsnetzes Gebühren für eine Zugangsschaltung zum Internet erfasst und dem Teilnehmer zusammen mit seiner Telefonrechnung berechnet werden. Ein Teil der so erfassten Gebühren wird dann z.B. an einen ISP weitergegeben. Im Gegensatz zu der Erfindung ist es dabei jedoch nur möglich, dass das Telefon-Telekommunikationsnetz die Gebühren zeitabhängig, während des Bestehens der Zugangsschaltung berechnet. Erfindungsgemäß kann jedoch die Internet-Zugangseinrichtung Gebühren nicht nur abhängig von der Nutzungszeit von Internet-Diensten, sondern auch abhängig von Menge und Qualität der von der Internet-Diensteinrichtung abgerufenen oder an diese geschickten Daten berechnen. Weiter muss das Telefon-Telekommunikationsnetz nur unwesentlich aufgerüstet werden und wird nicht durch eine unter Umständen aufwendige Gebührenerfassung belastet, da nicht das Telefon-Telekommunikationsnetz, sondern die Internet-Zugangseinrichtung die Gebühren ermittelt und der ohnehin vorhandenen Gebührenerfassungseinrichtung zur Buchung übermittelt.

Erfindungsgemäß können die Internet-Zugangseinrichtung und die Internet-Diensteinrichtung auch zur Ermittlung der Gebührenforderung interaktiv zusammenwirken, indem beispielsweise die Internet-Diensteinrichtung der Internet-Zugangseinrichtung eine Gebührenforderung mit einer Angabe von Gebühren für die Erbringung des Dienstes an die übermittelt. Dabei kann die Internet-Diensteinrichtung das Erbringen des angeforderten Dienstes davon abhängig machen, dass die Internet-Zugangseinrichtung der Internet-Diensteinrichtung eine Zahlungsbestätigungsnachricht sendet, mit der die Internet-Zugangseinrichtung der Internet-Diensteinrichtung das Absenden der Gebührennachricht an die Gebührenerfassungseinrichtung bestätigt. Die Internet-Zugangseinrichtung wird somit von einer Gebührenberechnung weitgehend entlastet und für die Internet-Diensteinrichtung wird gewissermaßen "Zahlungssicherheit" gewährt. Weiter kann auf diese Weise eine auch sogenannter elektronischer Handel (E-Commerce) abgewickelt werden. Eine Zahlung per Kreditkarte, wobei ausspähbare, unsichere Transaktionen über das Telefon-Telekommunikationsnetz oder das Internet notwendig sind, kann vermieden werden.

Manche Internet-Dienste werden dem Teilnehmer nur gegen Zahlung per Kreditkarte angeboten. Nicht jeder Teilnehmer besitzt jedoch eine Kreditkarte oder ist bereit, z.B. wegen der erwähnten Sicherheitsrisiken, seine Kreditkarte für einen solchen Zweck einzusetzen. Dann kann anstelle des Teilnehmers die Internet-Zugangseinrichtung die Zahlung per Kreditkarte vornehmen und dies dem Teilnehmer in bereits dargestellter Weise in Rechnung stellen. Dazu sendet die Internet-Diensteinrichtung eine Zahlungseinwilligungsnachricht, mit der die Internet-Zugangseinrichtung in eine Zahlung per Kreditkarte von für eine Erbringung eines Dienstes angeforderten Gebühren zugunsten der Internet-Diensteinrichtung einwilligt.

Die Internet-Zugangseinrichtung kann das Senden der Gebührennachricht an die Gebührenerfassungseinrichtung des Telefon-Telekommunikationsnetzes auch davon abhängig machen, dass der Teilnehmer eine von der Internet-Zugangseinrichtung an das Endgerät gesendete Anforderungsnachricht für eine Zahlungsbestätigung mit einer zustimmenden Eingabe an seinem Endgerät quittiert und das Endgerät der Internet-Zugangseinrichtung daraufhin eine Zahlungsbestätigungsnachricht übermittelt. Der Teilnehmer behält so stets die Kontrolle über seine Zahlungen. Zur weiteren Erhöhung der Sicherheit und der Kontrolle des Teilnehmers über seine Zahlungen kann das Endgerät eine beispielsweise durch den Teilnehmer angegebene Authentitätskennung an die Internet-Zugangseinrichtung verschlüsselt oder unverschlüsselt übermitteln. Die Internet-Zugangseinrichtung erlaubt dann nur bei Vorliegen dieser Authentitätskennung Zugang zu Internet-Diensten.

Die Gebührenerfassungseinrichtung kann die in der Gebührennachricht angegebenen Gebühren zu denjenigen Gebühren hinzubuchen, die für die Nutzung des Telefon-Telekommunikationsnetzes durch den Teilnehmer anfallen, so dass nicht einmal ein separates Konto für die Nutzungsgebühren für Internet-Dienste geführt werden muss. Es ist jedoch auch möglich, dass die Gebührenerfassungseinrichtung die in der Gebührennachricht angegebenen Gebühren von einem vorausbezahlten Konto des Teilnehmers abbucht, so dass der Teilnehmer ein durch ihn gesetztes Zahlungslimit auf keinen Fall überschreitet und dass auf Seiten des Telefon-Telekommunikationsnetzes eine tatsächliche Bezahlung der Gebühren sichergestellt ist.

Zusätzlich zu den Gebühren für die Erbringung des Dienstes kann die Internet-Zugangseinrichtung in der Gebührennachricht an die Gebührenerfassungseinrichtung auch Gebühren für das Absenden der Gebührennachricht angeben und so auch für das Betreiben der erfindungsgemäßen Vergebührung auf eine für den Teilnehmer bequeme und für den Betreiber der Internet-Zugangseinrichtung attraktive Weise Gebühren berechnen.

Im folgenden werden die Erfindung und ihre Vorteile anhand eines Ausführungsbeispiels unter Zuhilfenahme der Zeichnungen dargestellt.
- Figur 1: zeigt eine Anordnung zur Ausführung des erfindungsgemäßen Verfahrens mit einem Endgerät TERA und je einem Ausführungsbeispiel einer erfindungsgemäßen Vermittlungsstelle SSP, eines erfindungsgemäßen Gebührenrechners ACC und einer erfindungsgemäßen Internet-Zugangseinrichtung POP und
- Figur 2: zeigt ein Ablaufdiagramm des erfindungsgemäßen Verfahrens.

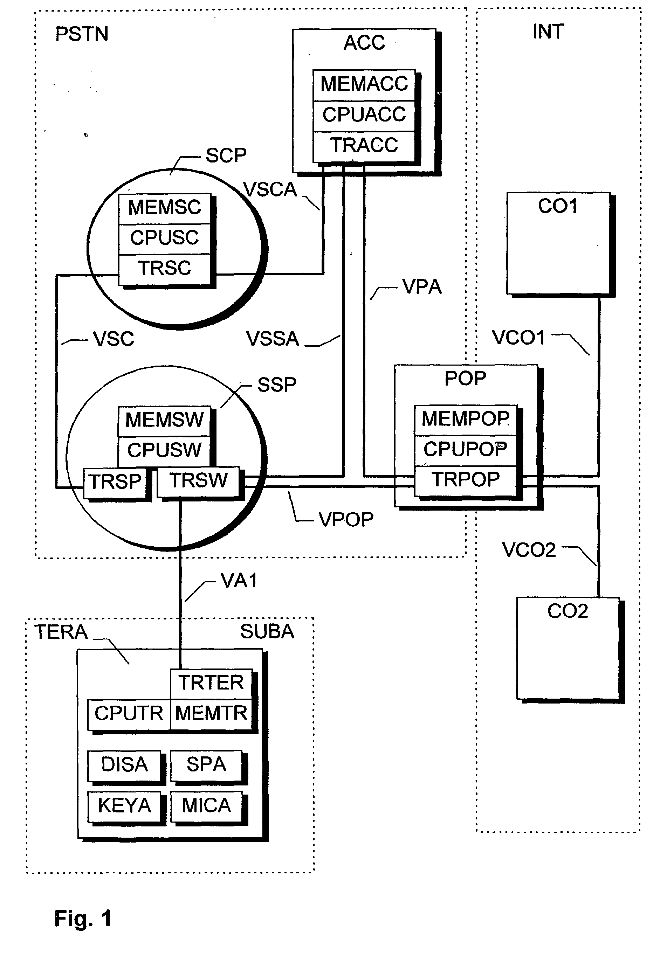

In Figur 1 ist eine beispielhafte Anordnung dargestellt, mit der die Erfindung ausgeführt werden kann. Figur 1 zeigt ein Telekommunikationsnetz PSTN und das Internet INT, jeweils angedeutet durch einen punktierten Kasten. Ein durch einen weiteren punktierten Kasten angedeuteter Teilnehmer SUBA verfügt über ein Endgerät TERA, das über eine Teilnehmeranschlussleitung VA1 mit einer Dienst-Vermittlungsstelle SSP des Telekommunikationsnetzes PSTN verbunden ist. Über das Telekommunikationsnetz PSTN kann der Teilnehmer SUBA mit seinem Endgerät TERA Zugang zum Internet INT erhalten.

Das Endgerät TERA ist vorzugsweise ein für einen Anschluss an das Internet ausgerüsteter Personal Computer, kann aber beispielsweise auch ein Internet-Kommunikation geeignetes Mobilfunk-Telefon oder Festnetz-Telefon sein. Das Endgerät TERA weist ein Verbindungsmittel TRTER auf, bei dem es sich beispielsweise um ein Modem oder um einen ISDN-Adapter handelt. Mit dem Verbindungsmittel TRTER kann das Endgerät TERA eine Verbindung über das Telekommunikationsnetz PSTN zum Internet INT aufbauen. Weiterhin weist das Endgerät TERA ein Steuermittel CPUTR sowie ein Speichermittel MEMTR auf. Das Steuermittel CPUTR ist beispielsweise ein Prozessor mit dem Programm-Code ausgeführt werden kann, der in dem Speichermittel MEMTR gespeichert ist. Bei dem Speichermittel MEMTR handelt es sich z.B. um eine Festplatte oder um RAM-Bausteine. Weiterhin weist das Endgerät TERA ein Anzeigemittel DISA sowie ein Eingabemittel KEYA auf. Das Anzeigemittel DISA ist beispielsweise ein Computer-Monitor oder ein LCD-Display (Liquid Cristal Display). Das Eingabemittel KEYA kann eine Tastatur oder eine Maus sein. Weiterhin weist das Endgerät TERA einen Lautsprecher SPA sowie ein Mikrofon MICA auf, mit denen Sprachaus- bzw. Spracheingabe möglich sind. Mit Hilfe von in dem Speichermittel MEMTR abgelegten und durch das Steuermittel CPUTR ausführbaren Programmcode, insbesondere eines sogenannten Browsers fungiert das Endgerät TERA als ein Terminal für Internet-Kommunikation, bei der durch den Browser editierbare Daten aus dem Internet INT geladen oder in das Internet INT gesendet werden.

Von dem Telekommunikationsnetz PSTN, das in dem Ausführungsbeispiel als Intelligentes Netzwerk (IN) ausgebildet ist, sind stellvertretend für weitere, in Figur 1 nicht gezeigte Einrichtungen, z.B. Vermittlungsstellen, Vorfeldeinrichtungen und Verbindungsleitungen, die Vermittlungsstelle SSP, ein Dienst-Steuerknoten SCP sowie ein Gebührenrechner ACC gezeigt. Die Vermittlungsstelle SSP ist ein sogenannter Service Switching Point und der Dienst-Steuerknoten SCP ein sogenannter Service Control Point eines Intelligenten Netzes. Die grundsätzlichen Funktionen eines Service Switching Points und eines Service Control Points sind durch die ITU (International Telecommunication Union) standardisiert und müssen deshalb an dieser Stelle nicht weiter ausgeführt werden. Weitere Einrichtungen des als Intelligentes Netz ausgebildeten Telekommunikationsnetzes PSTN, wie z.B. sogenannter Service Management Point, der durch den Dienst-Steuerknoten SCP erbrachte Dienste managt sowie ein sogenanntes Service Creation Environment, mit dem Dienste für ein Intelligentes Netz erzeugt werden können, sind aus Gründen der Übersichtlichkeit in Figur 1 nicht gezeigt.

Die Vermittlungsstelle SSP und der Dienst-Steuerknoten SCP sind über eine Verbindung VSC, der Dienst-Steuerknoten SCP und der Gebührenrechner ACC über eine Verbindung VSCA miteinander verbunden. Bei den Verbindungen VSC und VSCA handelt es sich um Verbindungen, die vorzugsweise über einen Signalisierungskanal oder über ein Signalisierungsnetzwerk geführt werden. Ein solches Signalisierungsnetzwerk ist z.B. das zentrale Zeichengabesystem Nr. 7.

Von der Vermittlungsstelle SSP sind beispielhaft einige wesentliche Komponenten gezeigt, nämlich Verbindungsmittel TRSW und TRSP sowie ein Steuermittel CPUSW und ein Speichermittel MEMSW. Mit dem Verbindungsmittel TRSW kann die Vermittlungsstelle SSP Daten- und Sprachverbindungen zu Teilnehmern oder anderen, nicht gezeigten Vermittlungsstellen aufbauen. Mit dem Verbindungsmittel TRSP kann die Vermittlungsstelle SSP Signalisierungsverbindungen, wie z.B. die Verbindung VSC zu dem Dienst-Steuerknoten SCP aufbauen. Bei dem Steuermittel CPUSW handelt es sich um einen Prozessor oder um eine Gruppe von Prozessoren, die Befehle ausführen können, die in dem Speichermittel MEMSW gespeichert sind. Das Steuermittel CPUSW steuert die Funktionen der Vermittlungsstelle SSP und nimmt dabei beispielsweise auf die Funktionen des Verbindungsmittels TRSW Einfluss. Das Verbindungsmittel TRSW, das Steuermittel CPUSW und das Speichermittel MEMSW sind durch in Figur 1 nicht dargestellte Verbindungen untereinander verbunden. Weiterhin kann die Vermittlungsstelle SSP weitere Baugruppen aufweisen, z.B. ein Koppelnetzwerk oder eine Schnittstelle zu einem Network Management System. Die Vermittlungsstelle SSP kann eine Ortsvermittlungsstelle sein, an die ausser dem Endgerät TERA auch weitere, nicht dargestellte Endgeräte angeschlossen sind. Der Vermittlungsstelle SSP können jedoch auch weitere, nicht dargestellte Einrichtungen, z.B. eine Ortsvermittlungsstelle oder eine Vorfeldeinrichtung, vorgelagert sein, an die dann das Endgerät TERA angeschlossen ist.

Der Dienst-Steuerknoten SCP weist ein Verbindungsmittel TRSC, sowie ein Steuermittel CPUSC und Speichermittel MEMSC auf. Bei dem Dienst-Steuerknoten SCP kann es sich um einen Server handeln, der durch ein UNIX-Betriebssystem oder ein Windows-NT-Betriebssystem betrieben wird. Das Steuermittel CPUSC ist ein Prozessor oder ein Cluster von Prozessoren, das die Befehle des Betriebssystems, das in dem Speicher MEMSC gespeichert ist, ausführt. Weiterhin können in dem Speichermittel MEMSC, das beispielsweise eine Festplatte oder RAM-Bausteine umfasst, Programmcode-Sequenzen gespeichert sein, die von dem Steuermittel CPUSC ausgeführt werden. Das Steuermittel CPUSC beeinflusst auch die Funktionen des Verbindungsmittels TRSC, mit dem z.B. die erwähnten Verbindungen VSC und VSCA aufgebaut werden können. Der Dienst-Steuerknoten SCP weist auch weitere, in Figur 1 nicht dargestellte Baugruppen auf, z.B. einen Monitor, eine Tastatur und eine Maus. Der Dienst-Steuerknoten SCP erbringt für die Vermittlungsstelle SSP, sowie auch für weitere, nicht dargestellte aber ähnlich ausgestattete Vermittlungsstellen Dienste. Ein solcher Dienst ist beispielsweise der bekannte Freecall-Dienst (Rufnummern beginnend mit "0800").

Der Gebührenrechner ACC ist eine Gebührenerfassungseinrichtung und steht beispielhaft für weitere, nicht dargestellte Gebührenrechner des Telekommunikationsnetzes PSTN. Der Gebührenrechner ACC bucht NutzungsGebühren für die Nutzung des Telekommunikationsnetzes PSTN auf Konten, die für an das Telekommunikationsnetz PSTN angeschlossene Teilnehmer durch den Gebührenrechner ACC geführt werden. Auch für den Teilnehmer SUBA führt der Gebührenrechner ACC ein solches Konto. Der Gebührenrechner ACC empfängt über ein Verbindungsmittel TRACC, einer Sende- und Empfangsbaugruppe, auf einer Verbindung VSSA von der Vermittlungsstelle SSP oder auf der Verbindung VSCA von dem Dienst-Steuerknoten SCP sogenannte Gebührentickets. Die Gebührentickets sind Nachrichten, in denen einer Teilnehmernummer oder einer Teilnehmerkennziffer zugeordnete Gebühren angegeben sind. Die in dem Gebührenticket angegeben Gebühren bucht dann ein Steuermittel CPUACC, das z.B. ein Prozessor ist, auf ein für die Teilnehmernummer geführtes Konto. Das Konto ist beispielsweise in einer Datenbank geführt, die in einem Speichermittel MEMACC des Gebührenrechners ACC abgelegt ist. Das Speichermittel MEMACC besteht z.B. aus RAM-Bausteinen und Festplatten-Laufwerken.

Von dem Internet INT sind lediglich eine Internet-Zugangseinrichtung POP, ein Server CO1 und ein Server C02 dargestellt. Die weitere Infrastruktur des Internets INT, beispielsweise Server, Router, Gateways und dergleichen sind in Figur 1 aus Gründen der Einfachheit nicht dargestellt. Die Zugangseinrichtung POP ermöglicht einen Zugang aus dem Telekommunikationsnetz PSTN zum Internet INT. Die Server CO1 und CO2 sind Rechner, über die ein ISP oder ein Content Provider Internet-Dienste anbieten, d.h. das Laden von Daten aus dem Internet INT und in das Internet INT ermöglichen, interaktive Spiele anbieten und dergleichen mehr.

Die Zugangseinrichtung POP weist ein Verbindungsmittel TRPOP, sowie ein Steuermittel CPUPOP und Speichermittel MEMPOP auf. Bei der Zugangseinrichtung POP kann es sich um einen Server handeln, der z.B. durch ein UNIX-Betriebssystem betrieben wird. Das Steuermittel CPUPOP ist ein Prozessor oder ein Cluster von Prozessoren, das die Befehle des Betriebssystems, das in dem Speicher MEMPOP gespeichert ist, ausführt. Weiterhin können in dem Speichermittel MEMPOP, das beispielsweise eine Festplatte oder RAM-Bausteine umfasst, Programmcode-Sequenzen gespeichert sein, die von dem Steuermittel CPUPOP ausgeführt werden. Das Steuermittel CPUPOP beeinflusst auch die Funktionen des Verbindungsmittels TRPOP, mit dem z.B. eine Verbindungen VPOP zu der Vermittlungsstelle SSP, eine Verbindung VPA zu dem Gebührenrechner ACC sowie eine Verbindung VCO1 zu dem Server CO1 und eine Verbindung VCO2 zudem Server CO2 aufgebaut werden können. Die Zugangseinrichtung POP weist auch weitere, in Figur 1 nicht dargestellte Baugruppen auf, z.B. einen Monitor, eine Tastatur und eine Maus.

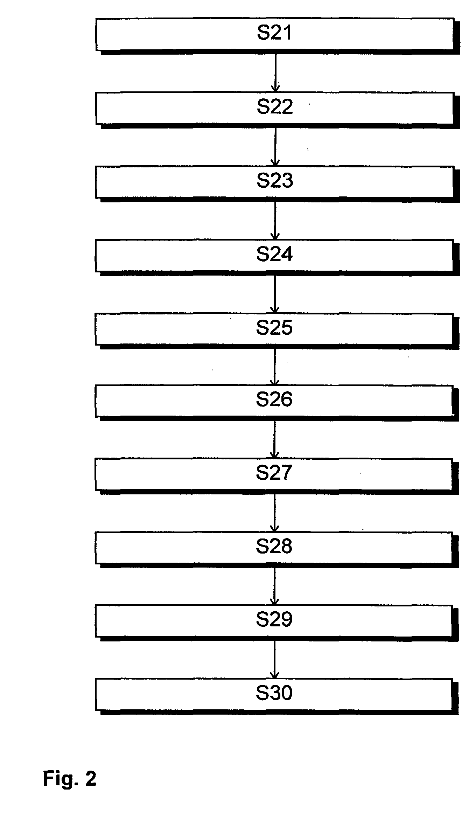

Im folgenden wird nun anhand der Anordnung aus Figur 1 unter Zuhilfenahme des Ablaufdiagrammes aus Figur 2 ein typischer Verfahrensablauf dargestellt.

In einem Schritt S21 baut der Teilnehmer SUBA mit seinem Endgerät TERA eine Verbindung zu der Zugangsrichtung POP des Internets INT auf. Dazu gibt der Teilnehmer SUBA an dem Eingabemittel KEYA eine Rufnummer der Zugangseinrichtung POP ein. Über die Teilnehmeranschlussleitung VA1 baut das Endgerät TERA daraufhin eine Verbindung zu der Vermittlungsstelle SSP auf. Mit Hilfe der Rufnummer der Zugangseinrichtung POP vervollständigt die Vermittlungsstelle SSP dann die gewünschte Verbindung des Teilnehmers SUBA und stellt dabei die weitere Verbindung VPOP1 zu der Zugangseinrichtung POP auf. Die Rufnummer der Zugangseinrichtung POP kann jedoch auch eine IN-Rufnummer, also eine logische Nummer sein. In diesem Fall sendet die Vermittlungsstelle SSP dem Dienst-Steuerknoten SCP eine Dienstanforderungsnachricht mit der "logischen" Rufnummer, die der Dienst-Steuerknoten SCP der Zugangseinrichtung POP mit einer Dienstnachricht mit der zum Aufbau der Verbindung VPOP notwendigen physikalischen Rufnummer beantwortet.

In einem Schritt S22 übermittelt das Telekommunikationsnetz PSTN eine dem Endgerät TERA zugeordnete Teilnehmernummer an die Zugangseinrichtung POP. Dabei überträgt die Vermittlungsstelle SSP beispielsweise einen von dem Endgerät TERA empfangenen "Calling Line Identifier" (CLI). Da jedoch der Vermittlungsstelle SSP nicht in jedem Fall eine Weitergabe CLI erlaubt ist, z.B. weil der Teilnehmer SUBA dies so bestimmt hat, kann die Vermittlungsstelle SSP auch bei dem Dienst-Steuerknoten SCP anfragen, ob die Weitergabe erlaubt ist. Es ist jedoch auch möglich, dass der Dienst-Steuerknoten SCP die Vermittlungsstelle SSP dazu anweist, statt dem CLI eine andere dem Teilnehmer SUBA zugeordnete und diesen identifizierende Kennziffer an die Zugangseinrichtung POP zu senden. Es kann auch bestimmt sein, dass von dem Endgerät TERA eine Authentitätskennung an die Zugangseinrichtung POP verschlüsselt oder unverschlüsselt übermittelt werden muss, damit nur der Teilnehmer SUBA sich als berechtigt für einen gebührenpflichtigen Zugang zum Internet INT bei der Zugangseinrichtung POP anmelden kann.

In einem Schritt S23 sendet das Endgerät TERA eine Dienstanforderungsnachricht an die Zugangseinrichtung POP. Je nach dem, an wen diese Dienstanforderungsnachricht adressiert ist, sendet die Zugangseinrichtung POP die Dienstanforderungsnachricht in einem Schritt S24 an den Server CO1 oder den Server CO2. Im vorliegenden Fall ist die Dienstanforderungsnachricht an den Server CO1 gerichtet.

Der Server CO1 sendet daraufhin in einem Schritt S25 eine Gebührenforderung mit einer Angabe von Gebühren für die Erbringung des in der Dienstanforderungsnachricht angeforderten Dienstes an die Zugangseinrichtung POP, welche die Gebührenforderung in dem Ausführungsbeispiel zunächst in ihrem Speichermittel MEMPOP ablegt. Es ist auch möglich, dass die Zugangseinrichtung POP die Gebührenforderung durch eine Analyse der an den
Server CO1 gerichteten Dienstanforderungsnachricht ermittelt, beispielsweise die Gebührenforderung aus vorbestimmten Kosten eines in der Dienstanforderungsnachricht angeforderten Dienstes definiert. Sofern in der Dienstanforderungsnachricht ein kostenloser Internet-Dienst angefordert wird, ist die Zugangseinrichtung POP für die bei der Erbringung des Dienstes übermittelten Daten"transparent" und ermittelt keine Gebühren. Es ist auch möglich, dass die Zugangseinrichtung POP die bei der Erbringung des in der Dienstanforderungsnachricht angeforderten Internet-Dienst übermittelten Daten analysiert und daraus eine Gebührenforderung bestimmt.

Wenn eine Dienstanforderungsnachricht an den Server CO2 gerichtet ist, kann die Zugangseinrichtung POP in gleicher Weise Gebühren ermitteln. Der
Teilnehmer ist damit unabhängig von irgendwelchen vertraglichen Vereinbarungen mit Betreibern der Server CO1 oder CO2.

Die Zugangseinrichtung POP sendet in einem optionalen Schritt S26 eine Anforderungsnachricht für eine Zahlungsbestätigung an das Endgerät TERA. Erst wenn der Teilnehmer SUBA in einem Schritt S27 durch eine Eingabe an dem Eingabemittel KEYA seine Zustimmung zu Zahlung gegeben hat, sendet das Endgerät TERA der Zugangseinrichtung POP eine Zahlungsbestätigungsnachricht.

In einem optionalen Schritt S28 sendet die Zugangseinrichtung POP dem Server CO1 auf der Verbindung VPA eine Zahlungsbestätigungsnachricht, mit der die Zugangseinrichtung POP dem Server CO1 das Absenden der Gebührennachricht an den Gebührenrechner ACC bestätigt. Der Server CO1 kann somit das Erbringen des angeforderten Internet-Dienstes vom Eingang einer gültigen Zahlung abhängig machen.

In einem nicht dargestellten Schritt erbringt der Server CO1 den angeforderten Dienst und die Zugangseinrichtung POP transferiert die dabei zu übermittelnden Daten zwischen Endgerät TERA und Server CO1.

In einem Schritt S29 sendet die Zugangseinrichtung POP an den Gebührenrechner ACC eine Gebührennachricht, auch "Ticket" genannt, welche die Teilnehmernummer des Teilnehmers SUBA sowie eine Angabe zumindest der in der Gebührenforderung die für die Nutzung des angeforderten Dienstes angeforderten Gebühren enthält. Die Gebührennachricht kann ein speziell für die Kommunikation zwischen der Zugangseinrichtung POP und dem Gebührenrechner ACC definiertes Format haben oder ein für die Vergebührung von Ruf-Verbindungen auf dem Telekommunikationsnetz PSTN gebräuchliches, sogenanntes "Call-Ticket" sein. Der Gebührenrechner ACC bucht dann in einem Schritt S30 die in der Gebührennachricht angegebenen Gebühren auf ein Konto des Teilnehmers SUBA, auf das auch die für die Nutzung des Telekommunikationsnetzes PSTN oder für die Nutzung von IN-Diensten anfallende Gebühren gebucht werden können. In der Gebührennachricht kann die Zugangseinrichtung POP zusätzlich auch solche Gebühren angeben, die die Zugangseinrichtung POP für ihre Dienstleistung verlangt.

Die Zugangseinrichtung POP kann mehrere Gebührenforderungen zu in einer Gebührennachricht zusammenfassen oder auch jede Gebührenforderung sozusagen "online" an den Gebührenrechner ACC senden, jeweils bei Anforderung eines Internet-Dienstes durch das Endgerät TERA eine Gebührennachricht.

Der Gebührenrechner ACC kann die in der von der Zugangseinrichtung POP gesendeten Gebührennachricht angegebenen Gebühren auch von einem Konto abbuchen, das der Teilnehmer SUBA zuvor mit einem Zahlungsbetrag aufgefüllt hat. Zur Vorausbezahlung wirken dabei der Dienst-Steuerknoten SCP und die Vermittlungsstelle SSP sowie eventuell ein in Figur 1 nicht dargestellter Service Management Point (SMP) zusammen. Der Teilnehmer SUBA baut dazu mit seinem Endgerät TERA eine Verbindung über die Teilnehmeranschlussleitung VA1, die Vermittlungsstelle SSP und die Verbindung VSC zu dem Dienst-Steuerknoten SCP auf. In Interaktion mit dem Dienst-Steuerknoten SCP - oder dem nicht dargestellten SMP - wird dabei von dem Endgerät TERA an den Dienst-Steuerknoten SCP eine Zahlungsbestätigung über einen Buchungsbetrag gesendet, der beispielsweise von einer Kreditkarte des Teilnehmers SUBA oder von einer durch das Endgerät TERA eingelesenen Chipkarte abgebucht wird. Der Dienst-Steuerknoten SCP sendet dann eine Nachricht an den Gebührenrechner ACC, mit der das Konto um den Buchungsbetrag aufgefüllt wird.

Es ist auch möglich, dass die Zugangseinrichtung POP in die Vermittlungsstelle SSP integriert ist. Dabei können das Speichermittel MEMSW und das Speichermittel MEMPOP, das Steuermittel CPUSW und das CPUPOP sowie das Verbindungsmittel TRSW und das Verbindungsmittel TRPOP als separate Baugruppen ausgeführt sein oder das Steuermittel CPUSW erfüllt zusätzlich die Funktionen des Steuermittels CPUPOP, das Speichermittel MEMSW die Funktionen des Speichermittels MEMPOP sowie das Verbindungsmittel TRSW die Funktionen des Verbindungsmittels TRPOP. Die Verbindung VPOP ist dann eine interne Verbindung in der Vermittlungsstelle SSP.

Ferner kann auch der Gebührenrechner ACC in die Vermittlungsstelle SSP oder in die Zugangseinrichtung POP integriert sein. Dann erfüllen das Steuermittel CPUSW bzw. das Steuermittel CPUPOP die Funktionen des Steuermittels CPUACC, das Speichermittel MEMSW bzw. das Speichermittel MEMPOP die Funktionen des Speichermittels MEMACC sowie das Verbindungsmittel TRSW bzw. das Verbindungsmittel TRPOP die Funktionen des Verbindungsmittels TRACC. Die Verbindungen VSSA und VPA sind dann interne Verbindungen in der Vermittlungsstelle SSP bzw. in der Zugangseinrichtung POP.

## Patentansprüche

1. Verfahren zur individuellen Vergebührung von Internet-Diensten durch eine Internet-Zugangseinrichtung (POP), über die ein Teilnehmer (SUBA) mit einem Endgerät (TERA), das über eine Teilnehmeranschlussleitung (VA1) an ein Telefon-Telekommunikationsnetz (PSTN) angeschlossen ist, mit Hilfe des Telefon-Telekommunikationsnetzes (PSTN) Zugang zum Internet (INT) erhält, mit den Schritten:
- das Endgerät (TERA) baut eine Verbindung (VA1, VPOP) über das Telefon-Telekommunikationsnetz (PSTN) zu der Internet-Zugangseinrichtung (POP) auf,
- das Telefon-Telekommunikationsnetz (PSTN) übermittelt eine dem Endgerät (TERA) zugeordnete Teilnehmernummer an die Internet-Zugangseinrichtung (POP),
- das Endgerät (TERA) sendet eine Dienstanforderungsnachricht an die Internet-Zugangseinrichtung (POP), die die Internet-Zugangseinrichtung (POP) an eine Internet-Diensteinrichtung (CO1, CO2) zur Erbringung des Dienstes weitersendet,
- die Internet-Zugangseinrichtung (POP) ermittelt eine Gebührenforderung mit einer Angabe von Gebühren für die Erbringung des Dienstes,
- die Internet-Zugangseinrichtung (POP) sendet an eine Gebührenerfassungseinrichtung (ACC) des Telefon-Telekommunikationsnetzes (PSTN) eine Gebührennachricht, welche die Teilnehmernummer des Teilnehmers (SUBA) sowie eine Angabe zumindest der in der Gebührenforderung die für die Nutzung des angeforderten Dienstes angeforderten Gebühren enthält,
- die Gebührenerfassungseinrichtung (ACC) bucht die in der Gebührennachricht angegebenen Gebühren auf ein Konto des Teilnehmers.

2. Verfahren nach Anspruch 1, dadurch gekennzeichnet, dass die Internet-Diensteinrichtung (CO1, CO2) eine Gebührenforderung mit einer Angabe von Gebühren für die Erbringung des Dienstes an die Internet-Zugangseinrichtung (POP) übermittelt.

3. Verfahren nach Anspruch 1, dadurch gekennzeichnet, dass die Internet-Zugangseinrichtung (POP) der Internet-Diensteinrichtung (CO1, CO2) eine Zahlungsbestätigungsnachricht sendet, mit der die Internet-Zugangseinrichtung (POP) der Internet-Diensteinrichtung (CO1, CO2) das Absenden der Gebührennachricht an die Gebührenerfassungseinrichtung (ACC) bestätigt.

4. Verfahren nach Anspruch 1, dadurch gekennzeichnet, dass die Internet-Zugangseinrichtung (POP) eine Anforderungsnachricht für eine Zahlungsbestätigung an das Endgerät (TERA) sendet, dass das Endgerät (TERA) eine zustimmenden Eingabe des Teilnehmers (SUBA) zur Zahlung erfasst und dass das Endgerät (TERA) nach Erfassung der zustimmenden Eingabe der Internet-Zugangseinrichtung (POP) eine Zahlungsbestätigungsnachricht übermittelt.

5. Verfahren nach Anspruch 1, dadurch gekennzeichnet, dass die Internet-Diensteinrichtung (CO1, CO2) eine Gebührenforderung mit einer Angabe von Gebühren für die Erbringung des Dienstes an die Internet-Zugangseinrichtung (POP) übermittelt und dass die Internet-Diensteinrichtung (CO1, CO2) eine Zahlungseinwilligungsnachricht sendet, mit der die Internet-Zugangseinrichtung (POP) in eine Zahlung, insbesondere per Kreditkarte, zugunsten der Internet-Diensteinrichtung (CO1, CO2) einwilligt.

6. Verfahren nach Anspruch 1, dadurch gekennzeichnet, dass die Gebührenerfassungseinrichtung (ACC) die in der Gebührennachricht angegebenen Gebühren von einem vorausbezahlten Konto des Teilnehmers (SUBA) abbucht.

7. Verfahren nach Anspruch 1, dadurch gekennzeichnet, dass die Internet-Zugangseinrichtung (POP) in der Gebührennachricht an die Gebührenerfassungseinrichtung (ACC) zusätzlich zu den von Gebühren für die Erbringung des Dienstes Gebühren für das Absenden der Gebührennachricht angibt.

8. Verfahren nach Anspruch 1, dadurch gekennzeichnet, dass das Endgerät (TERA) eine Authentitätskennung an die Internet-Zugangseinrichtung (POP) verschlüsselt oder unverschlüsselt übermittelt.

9. Internet-Zugangseinrichtung (POP) zur individuellen Vergebührung von Internet-Diensten, wobei ein Teilnehmer (SUBA) mit einem Endgerät, das über eine Teilnehmeranschlussleitung (VA1) an ein Telefon-Telekommunikationsnetz (PSTN) angeschlossen ist, über das Telefon-Telekommunikationsnetz (PSTN) und über die Internet-Zugangseinrichtung (POP) mit dem Internet (INT) verbunden ist, **dadurch gekennzeichnet, dass** die Internet-Zugangseinrichtung (POP) Empfangsmittel (TRPOP, CPUPOP, MEMPOP) aufweist, die derart ausgestaltet sind, dass die Internet-Zugangseinrichtung (POP) eine von dem Telefon-Telekommunikationsnetz (PSTN) übermittelte, dem Endgerät (TERA) zugeordnete Teilnehmernummer empfangen kann, dass die Empfangsmittel (TRPOP, CPUPOP, MEMPOP) weiter derart ausgestaltet sind, dass die Internet-Zugangseinrichtung (POP) eine von dem Endgerät (TERA) gesendete Dienstanforderungsnachricht empfangen kann, dass die Internet-Zugangseinrichtung (POP) Sendemittel (TRPOP, CPUPOP, MEMPOP) aufweist, die derart ausgestaltet sind, dass die Internet-Zugangseinrichtung (POP) die Dienstanforderungsnachricht an eine Internet-Diensteinrichtung (CO1, CO2) zur Erbringung des Dienstes weitersenden kann, dass die Internet-Zugangseinrichtung (POP) Gebührenerfassungsmittel (CPUPOP, MEMPOP) aufweist, die derart ausgestaltet sind, dass die Internet-Zugangseinrichtung (POP) eine Gebührenforderung mit einer Angabe von Gebühren für die Erbringung des Dienstes ermitteln kann, dass die Sendemittel (TRPOP, CPUPOP, MEMPOP) weiter derart ausgestaltet sind, dass die Internet-Zugangseinrichtung (POP) an eine Gebührenerfassungseinrichtung (ACC) des Telefon-Telekommunikationsnetzes (PSTN) eine Gebührennachricht senden kann, welche die Teilnehmernummer des Teilnehmers (SUBA) sowie eine Angabe zumindest der in der Gebührenforderung die für die Nutzung des angeforderten Dienstes angeforderten Gebühren enthält.

10. Gebührenerfassungseinrichtung (ACC) zur individuellen Vergebührung von Internet-Diensten, wobei ein Teilnehmer (SUBA) mit einem Endgerät (TERA), das über eine Teilnehmeranschlussleitung (VA1) an ein Telefon-Telekommunikationsnetz (PSTN) angeschlossen ist, über das Telefon-Telekommunikationsnetz (PSTN) und über eine Internet-Zugangseinrichtung (POP) mit dem Internet (INT) verbunden ist, **dadurch gekennzeichnet, dass** die Gebührenerfassungseinrichtung (ACC) Empfangsmittel (TRACC) aufweist, die derart ausgestaltet sind, dass die Gebührenerfassungseinrichtung (ACC) eine Gebührennachricht von der Internet-Zugangseinrichtung (POP) empfangen kann, in der eine Teilnehmernummer des Teilnehmers (SUBA) sowie eine Angabe zumindest der in der Gebührenforderung die für die Nutzung eines von dem Teilnehmer (SUBA) über die Internet-Zugangseinrichtung (POP) bei einer Internet-Diensteinrichtung (CO1, CO2) angeforderten Dienstes angeforderten Gebühren enthält, und dass die Gebührenerfassungseinrichtung (ACC) Buchungsmittel (CPUACC, MEMACC) aufweist, die derart ausgestaltet sind, dass die Gebührenerfassungseinrichtung (ACC) die in der Gebührennachricht angegebenen Gebühren auf ein Konto des Teilnehmers (SUBA) buchen kann.

11. Vermittlungsstelle mit einer Internet-Zugangseinrichtung (POP) zur individuellen Vergebührung von Internet-Diensten, wobei ein Teilnehmer (SUBA) mit einem Endgerät (TERA), das über eine Teilnehmeranschlussleitung (VA1) an ein Telefon-Telekommunikationsnetz (PSTN) angeschlossen ist, über das Telefon-Telekommunikationsnetz (PSTN) und über die Internet-Zugangseinrichtung (POP) mit dem Internet (INT) verbunden ist, **dadurch gekennzeichnet, dass** die Internet-Zugangseinrichtung (POP) Empfangsmittel (TRPOP, CPUPOP, MEMPOP) aufweist, die derart ausgestaltet sind, dass die Internet-Zugangseinrichtung (POP) eine von dem Telefon-Telekommunikationsnetz (PSTN) übermittelte, dem Endgerät (TERA) zugeordnete Teilnehmernummer empfangen kann, dass die Empfangsmittel (TRPOP, CPUPOP, MEMPOP) weiter derart ausgestaltet sind, dass die Internet-Zugangseinrichtung (POP) eine von dem Endgerät (TERA) gesendete Dienstanforderungsnachricht empfangen kann, dass die Internet-Zugangseinrichtung (POP) Sendemittel (TRPOP, CPUPOP, MEMPOP) aufweist, die derart ausgestaltet sind, dass die Internet-Zugangseinrichtung (POP) die Dienstanforderungsnachricht an eine Internet-Diensteinrichtung (CO1, CO2) zur Erbringung des Dienstes weitersenden kann, dass die Internet-Zugangseinrichtung (POP) Gebührenerfassungsmittel (CPUPOP, MEMPOP) aufweist, die derart ausgestaltet sind, dass die Internet-Zugangseinrichtung (POP) eine Gebührenforderung mit einer Angabe von Gebühren für die Erbringung des Dienstes ermitteln kann, dass die Sendemittel (TRPOP, CPUPOP, MEMPOP) weiter derart ausgestaltet sind, dass die Internet-Zugangseinrichtung (POP) an eine Gebührenerfassungseinrichtung (ACC) des Telefon-Telekommunikationsnetzes (PSTN) eine Gebührennachricht senden kann, welche die Teilnehmernummer des Teilnehmers (SUBA) sowie eine Angabe zumindest der in der Gebührenforderung die für die Nutzung des angeforderten Dienstes angeforderten Gebühren enthält.
